# EUROPEAN PATENT SPECIFICATION

(11) **EP 1 538 860 B1**
(45) Date of publication and mention of the grant of the patent: **20.06.2007**
(21) Application number: 03425777.4
(22) Date of filing: 03.12.2003
(51) Int. Cl.: H04Q 7/38, H04Q 7/22

(54) **Method and telecommunications system for positioning a target user equipment using a mobile originating-location request (MO-LR) procedure**
Verfahren und Telekommunikationssystem zur Positionsbestimmung einer Ziel-Teilnehmereinrichtung unter Nutzung einer "Mobile Originating-Location Request (MO-LR)"-Prozedur
Procédé et système de télécommunications pour le positionnement d'un équipement utilisateur cible en utilisant une procédure "Mobile Originating-Location Request (MO-LR)"

(43) Date of publication of application: 08.06.2005
(73) Proprietor: TELEFONAKTIEBOLAGET LM ERICSSON (publ), 164 83 Stockholm (SE)
(72) Inventor: Lala, Alessandro, 80125 Napoli (IT); De Luca, Enrico, 81100 Caserta (IT); Iovieno, Maurizio, 84085 Mercato S. Severino (Salerno) (IT)
(74) Representative: Tonscheidt, Andreas

(56) References cited:
- EP-A- 1 337 123
- WO-A-02/17656
- GB-A- 2 381 419
- US-B1- 6 360 102
- "Digital cellular telecommunications system (Phase 2+) (GSM);Universal Mobile Telecommunications System (UMTS);Functional stage 2 description of location services (3GPP TS 23.271 version 5.3.0 Release 5); ETSI TS 123 271 V5.3.0 (2002-06)" ETSI TS 123 271 V5.3.0, XX, XX, June 2002 (2002-06), pages 1-76, XP002227478

## Description

### Field of the invention

The present invention relates to a method and telecommunications system for positioning a target User Equipment (UE) of a subscriber within a network for cellular communications using a mobile originating-location request procedure.

### Background of the invention

The positioning of User Equipment (UE) is a service provided by cellular networks. In particular, for example, the Global System for Mobile communication (GSM) and the Universal Mobile Telecommunication System (UMTS) networks, that facilitate determination of the locations of User Equipment, are able to determine location information. Location information may also be communicated between Gateway Mobile Location Centers (GMLCs), located in the same or a different Public Land Mobile Network (PLMN), via a known GMLC to GMLC interface.

By making use of radio signals, the capability to determine the geographic location of the user equipment is well known in the art. The location information may be requested by and reported to a client application within or attached to the core network of a cellular network. The positioning feature may be used internally by the access network of a cellular network or attached networks, e.g. for location assisted handover or to support other features such as home location billing, by value-added network services, by the UE itself or through the network, and by "third party" services. The positioning feature may also be used by an emergency service, which may be mandated or "value-added", but the position service is not exclusively for emergencies.

More in detail, as explained in document 3GPP TS 23.271 V6.4.0, 3rd Generation Partnership Project, Technical Specification Group Services and System Aspects, Functional stage 2 description of LoCation Service (LCS), Release 6, there are generally four location services procedures for allowing a subscriber to be positioned. The subscriber may be positioned from an external entity (*mobile terminating* positioning), or after a request from the network (*network induced* positioning), or may be informed of his own position after an own positioning request (*mobile originating* positioning), or may inform an external entity of his position after an own request (*mobile originating* positioning).

The position information is preferably reported in standard co-ordinates, for instance geographical co-ordinates, together with the time-of-day and the estimated errors or uncertainty of the location of the UE.

It shall be possible for the majority of UEs within a network, both active or idle, to use the positioning feature without compromising the radio transmission or signaling capabilities of the access networks.

The UE and the network may support a number of different positioning methods. Moreover, the UE may support privacy invocation request and response.

Current standardized architectures of a Location Service in GSM and UMTS networks provide for LCS entities, such as LCS clients and servers, which communicate between themselves by the messaging and signaling capabilities of the Access Network. Clients submit their requests to an LCS server for receiving information about positioning a UE.

In the known architectures, if a subscriber wishes to position a third party subscriber, the location must be requested by passing through a service provider, which is external to the network.

Moreover, in order to position a third party user equipment, a subscriber must have access to an LCS client, which in turn starts a terminating positioning procedure. Unfortunately, in most cases the LCS client may not be easily accessible by a subscriber, for instance because the particular user equipment of the subscriber requesting location services does not support LCS client functionality. This drawback may be troublesome for a user, especially if he needs a quick response.

WO-A-0217656 discloses a positioning method allowing a restriction of a positioning of a target user equipment with regard to a list of allowed user equipments. GB-A-2381419 also discloses such a positioning method, implemented using a network architecture, comprising an LCS client and an LCS server. US-B1-6360102 discloses a similar method of restricting access to positioning information, with additional restriction criteria, such as a day time.

### Summary of the invention

Aim of the present invention is to overcome the above mentioned drawbacks, particularly by providing a method, a service node and a telecommunications system for allowing a user equipment of a requesting subscriber to retrieve location information of a target user equipment of another subscriber, within the same or in a different PLMN.

User equipment in the context of the invention may be a mobile station, a computing device comprising or connected to means for wireless telecommunications, or a handset adapted to provide mobile telecommunications.

Within the scope of this aim, an object of the present invention is to preserve the standard architecture of the networks without affecting the communications standards among the various entities interacting over the network.

Another object of the present invention is to benefit of both existing standard Mobile Originating Location Request (MO-LR) and Mobile Terminating Location Request (MT-LR) procedures without changing the standard communication interfaces.

A further object is to meet the target user equipment privacy settings, through appropriate customization of the privacy settings by the target subscriber.

This aim, these objects and other which will become apparent hereinafter are achieved by a method for positioning a target user equipment of a first subscriber within a network for cellular communications, characterized in that it comprises the steps of: at a first service node connected to a Gateway Mobile Location Center, receiving a Mobile Originating Location Request MO-LR Location Services invoke from a requesting User Equipment of a second subscriber, the invoke comprising a target identifier of the target user equipment; initiating a checking whether an identifier associated with the requesting user equipment is comprised within a list of allowable identifiers of respective user equipments which are allowed to position the target user equipment; in response to a determination that the identifier associated with the requesting user equipment is comprised within the list of allowable identifiers, initiating a positioning of the target user equipment and returning location information resulting from the positioning to the requesting user equipment.

The aim and the objects of the invention are also achieved by a telecommunications system for positioning a target user equipment of a first subscriber within a network for cellular communications, the system comprising a service node connected to a Gateway Mobile Location Center and to means for positioning user equipments, characterized in that the service node comprises means for receiving a Mobile Originating Location Request MO-LR Location Services invoke from a requesting User Equipment of a second subscriber, the invoke comprising a target identifier of the target user equipment, and in that the system comprises: memory means for storing a list of allowable identifiers of respective user equipments which are allowed to position the target user equipment, checking means for checking whether an identifier associated with the requesting user equipment is comprised within the list of allowable identifiers, and means for returning location information resulting from the positioning to the requesting user equipment in response to a determination that the identifier associated with the requesting user equipment is comprised within the list of allowable identifiers.

Moreover, the aim and the objects of the invention are also achieved by a service node for positioning a target user equipment of a first subscriber within a network for cellular communications, the service node comprising means for communicating with a Gateway Mobile Location Center supporting positioning functionality and with the target user equipment, characterized in that the service node comprises: means for receiving a Mobile Originating Location Request MO-LR Location Services invoke from a requesting User Equipment of a second subscriber, the invoke comprising a target identifier of the target user equipment, means for initiating a checking whether an identifier associated with the requesting user equipment is comprised within a list of allowable identifiers of respective user equipments which are allowed to position said target user equipment, and means for initiating a positioning of the target user equipment, in response to a determination that the identifier associated with said requesting user equipment is comprised within the list of allowable identifiers.

The list of allowable identifiers is stored in a database which is preferably comprised in the SLPP (Subscriber Location service Privacy Profile) of the Home Location Register or the Home Subscriber Server. The list can be alternatively stored in any other centralized home operator's subscriber database of the target subscriber, as it is clear to the skilled in the art.

The checking is preferably performed at the MSC/SGSN serving the target UE, but it may be also performed at the GMLC as well, once it has accessed the target subscriber's information stored in the HLR/HSS.

### Brief description of the drawings

Further characteristics and advantages of the invention will become better apparent from the following description of preferred but not exclusive embodiments of the invention, illustrated by way of non-limitative embodiments in the accompanying drawings, wherein:

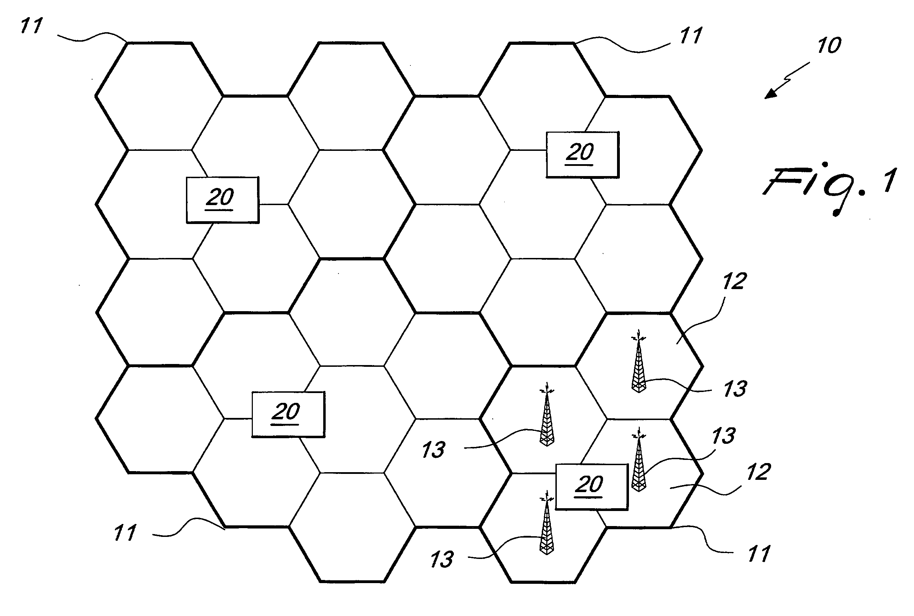

Figure **1** is a block diagram of a conventional cellular network;
Figure **2** is a block diagram of a standard LCS architecture for positioning a target user equipment;
Figure **3** is a block diagram of an architecture for allowing a user equipment to be positioned by a second user equipment, according to an embodiment of the present invention;
Figure **4** is a flow chart illustrating the steps involved for handling requests by a second subscriber for positioning a target user equipment;

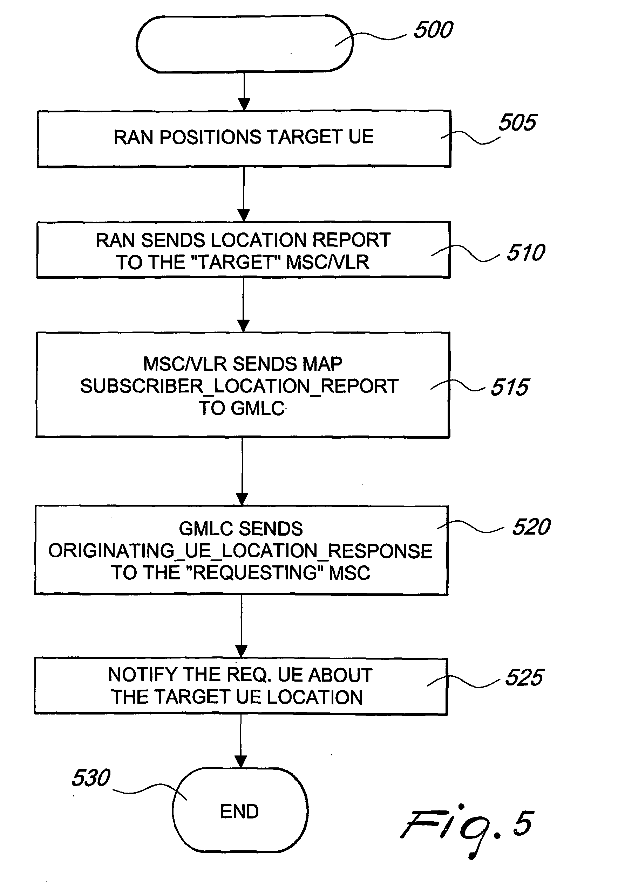

Figure **5** is a flow chart illustrating the steps involved for returning location information about the target user equipment to the requesting user equipment.

### Detailed description of the preferred embodiments

A typical GSM network **10** comprises a plurality of cells **12,** which are associated with at least one Base Transceiver Station **13** (briefly represented by a tower antenna) and which are grouped so as to form larger areas **11** associated with a particular geographical zone. Such areas are served by at least one Mobile Switching Center (MSC) **20** which preferably comprises or is connected to a Visitor Location Register (VLR) (MSC/VLR).

The basic function of MSC/VLR is to switch speech and data connections between Base Station Controllers (BSCs), other MSCs, other networks and external non-mobile-networks. The MSC also handles a number of functions associated with mobile subscribers, among others registration, location updating and handover between a UE and the PLMN.

In the area served by a certain MSC, the UE does not need to send update information about its location.

The VLR stores data about all customers who are roaming within the location area of the corresponding MSC. This data is updated with the location update procedure initiated from the UE through the MSC, or directly from the subscriber's Home Location Register (HLR) or Home Subscriber Server (HSS).

The HLR/HSS is the home register of the subscriber, which particularly stores information about the subscription, the services which are allowed by the subscriber and his location. When the subscriber roams into the location area of an MSC different from the home MSC, the HLR/HSS is updated accordingly. It is therefore clear that the role of HLR/HSS is very important for handling positioning procedures.

The HLR/HSS may be co-located with a given MSC/VLR, integrated with the MSC/VLR, or alternatively can service multiple MSC/VLRs. The HLR may be also in a network different from the network in which the UE is roaming.

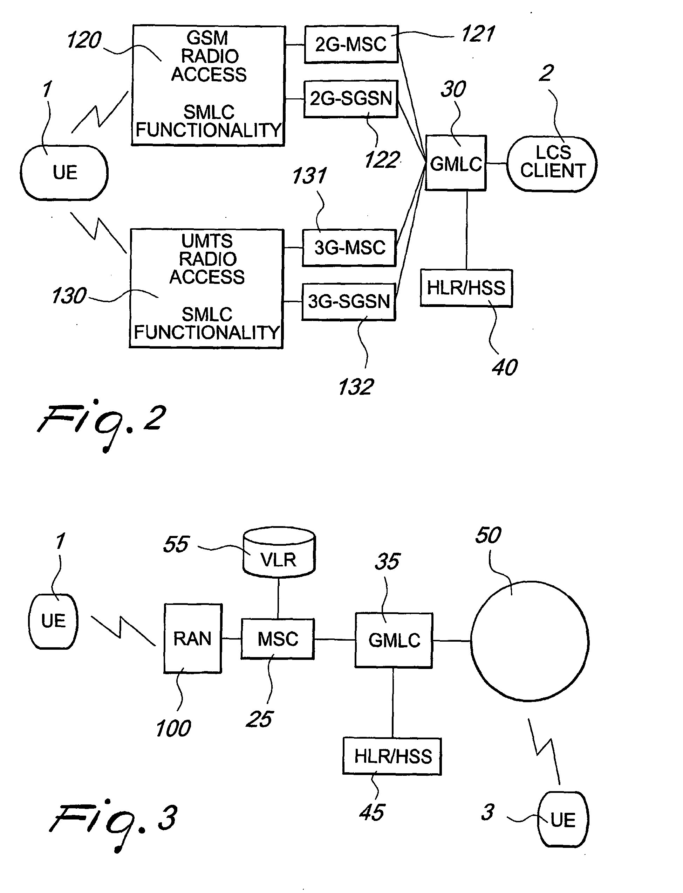

With reference to Figure **2**, a typical and conventional architecture supporting location-based services and UE positioning comprises at least one User Equipment (UE) **1** interfacing with a Radio Access Network (RAN), comprising any one of a Global System for Mobile Communications (GSM) Public Land Mobile Network (PLMN) **120** and a Universal Mobile Telecommunications System (UMTS) access network **130.**

Figure **2** further shows a Gateway Mobile Location Center (GMLC) **30**, which usually interfaces a plurality of LCS clients **2** and the mobile network, and contains functionality required to support Location Services. The GMLC **30** sends positioning requests to Service Nodes and may receive in answer location information about the target UE **1**. In the particular embodiment shown, the HLR/HSS **40** is connected to the GMLC **30.**

A service node may be any one of a 2G (2nd generation) Mobile Switching Center (2G-MSC) **121**, a 2G-Serving GPRS Support Node (2G-SGSN) **122**, in the case of a GSM network. Similarly, if the RAN is a UMTS Radio Access Network **130**, the service node may be a 3G (3rd generation)-MSC (3G-MSC) **131** as well as a 3G-SGSN **132**. Obviously, the same RAN may be simultaneously connected to a plurality of MSCs and SGSNs.

The GMLC usually interfaces with the LCS clients by means of an Application Programming Interface to allow third party service providers access to the mobile network. Moreover, the GMLC usually communicates with both the service node and the HLR/HSS by means of Mobile Application Part (MAP) messages. A typical MAP message which is of particular interest for the present invention is the MAP PROVIDE_SUBSCRIBER_LOCATION message, which is used by the GMLC to request the position of the UE from the Visited Mobile Switching Center (VMSC).

An MSC and a UE communicate (e.g., exchange mobility management messages) via Direct Transfer Application Part (DTAP) messages.

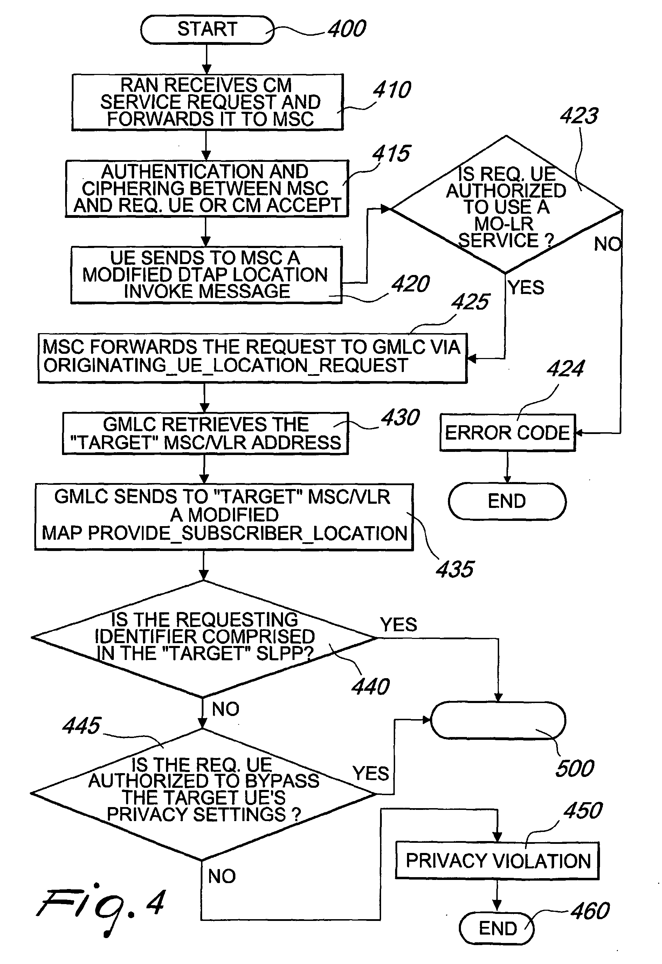

An architecture for allowing a user equipment to be positioned by a second user equipment, according to an embodiment of the present invention, is shown in Figure **3.**

The architecture comprises a first User Equipment **1** to be positioned, which interfaces with a Radio Access Network **100.** RAN **100** generically identifies any kind of mobile access networks, for instance the GSM RAN **120** and UMTS RAN **130** of Figure **2** (with their SMLC functionality) or a RAN based on a Code Division Multiple Access (CDMA), which is not shown in the figures but which is known to the skilled in the art.

A service node **25** (generically identifying either an MSC or an SGSN), for instance 2G-MSC **121**, 3G-MSC **131,** 2G-SGSN **122** and 3G-SGSN **132,** a GMLC **35** and a HLR/HSS **45** have enhanced functionality according to the present invention and are reciprocally connected in a conventional manner.

According to a particular embodiment of the present invention, the service node **25** is a 2G-MSC and the GMLC **35** accesses an external network **50** serving a second user equipment **3**. For example, the GMLC **35** communicates with the external network **50** by a standard GMLC to GMLC interface.

Either UE **1** or UE **3** may be in their respective home location area, or in areas different from the respective home location area, according to standard arrangements which are known to the skilled in the art.

In another embodiment of the present invention (not shown in the figures), the second user equipment is comprised in the same network in which the first user equipment is located and they communicate with the same RAN **100**. Many other arrangements are clear to the skilled in the art without departing from the scope of the present invention, as will become apparent hereinafter.

According to the invention, a new privacy list is stored in memory means within the network, preferably in the target Subscriber LCS Privacy Profile (SLPP) of the HLR/HSS **45.** This new information is needed to define a list of UE subscribers which are authorized to request the own location, in terms of geographical coordinates, for location services usage.

The privacy list comprises a number of allowable identifiers, each one associated with a respective user equipment. Such identifiers are, in a preferred embodiment of the invention, phone numbers associated to the authorized UEs.

When the target UE roams into a location area which is not directly served by the home MSC, the privacy list is downloaded to the MSC/VLR visited by the target subscriber through the MAP message conventionally called INSERT_SUBSCRIBER_DATA, which message is duly modified so as to carry information about such privacy list.

In order to allow the UE **1** to be positioned by the UE **3**, the particular procedure shown in figure **4** is preferably followed. The procedure concerns in particular the case of a GSM Circuit Switched (CS) network, but it is straightforward to apply the teachings of the invention to a GSM Packet Switched (PS) or to UMTS networks, either CS or PS.

At the beginning **400** of the procedure, if the subscriber of UE **3** is in idle mode, the UE **3** requests a radio connection setup and sends a Connection Management (CM) service request indicating a request for a call independent supplementary service to his RAN. Instead, if the UE **3** is in dedicated mode, the UE **3** sends a CM service request on the already established radio connection.

At step **410**, the RAN connected to the UE **3** receives the CM service request and forwards it to the core network, in particular to the MSC of the requesting UE's location area.

At step **415**, the MSC server instigates authentication and ciphering if the UE was in idle mode or returns a Direct Transfer CM Service Accept if the UE was in dedicated mode.

At step **420** the UE **3** sends to the MSC a DTAP message, which is based on a conventional MO-LR Location Services invoke, but is modified according to the invention. The modification to the standard invoke mainly consists in including an identifier of the target subscriber in the invoke. In the illustrative embodiment hereby described such identifier is advantageously the phone number of the UE **1**.

At step **423,** the MSC checks if the requesting UE is authorized to use the MO-LR service for locating a target user equipment other than its own. If not, the request is rejected, an error code is generated at step **424** and the procedure is ended.

Otherwise, at step **425** a checking procedure is initiated according to the invention. In detail, the MSC forwards the request to the GMLC of the target subscriber through a new MAP message which is hereby referred to as ORIGINATING_UE_LOCATION_REQUEST.

At this point the GMLC substantially handles the request as an ordinary Mobile Terminating (MT) positioning procedure, but new steps are performed according to the invention. In particular, at step **430,** the GMLC retrieves the MSC/VLR address at which the target subscriber is registered by contacting the HLR/HSS. Such "target" MSC/VLR may be also the same MSC/VLR from which the request started.

Then, at step **435**, the GMLC sends a PROVIDE_SUBSCRIBER_LOCATION MAP message which is modified so as to carry information about the requesting entity. In particular, an indication is provided so as to inform the target MSC that the location request is coming from an originating UE rather than from an LCS client. Such information comprises a unique identifier of the requesting UE, preferably its phone number.

In this case, privacy checks usually performed by the service node for handling requests by LCS clients are skipped, while a new check is performed.

Particularly, at step **440** it is checked whether the requesting UE's identifier, for instance its phone number, is comprised within the list of identifiers which are allowed to position the target UE.

If so, at step **500** the procedure enters substantially conventional MT-LR procedures, and positioning is initiated. In particular, at step **505** the target UE is positioned via RAN **100** and, at step **510**, the RAN **100** sends a standard Location report to the MSC **25**, which report may include a failure notification, should the location estimate be unsuccessful.

Then, at step **515,** the MSC **25** sends a MAP SUBSCRIBER_LOCATION_REPORT to the GMLC **35,** and no charging is performed in the MSC/VLR **25** which has performed the positioning.

At step **520**, the GMLC **35** forwards the report to the MSC of the requesting UE by means of a new MAP message ORIGINATING_UE_LOCATION_RESPONSE. Finally, at step **525**, the requesting UE **3** is notified about the location of the target UE **1** and the procedure ends at step **530.**

If, at step **440**, the requesting UE's identifier results not to be included in the privacy list, a further check is preferably performed at step **445,** so as to check whether the requesting UE is authorized to bypass the target UE's privacy settings, for example if the requesting UE is used for Legal Interception services.

If so, the procedures continues as in step **500**. If not, a privacy violation message is preferably returned to the requesting UE (step **450**) and the procedure is terminated (step **460**).

The actual checking is preferably performed at the "target" service node **25** itself, but it can be alternatively performed by other network elements which can access the list of allowable subscribers.

While a detailed description has been provided with reference to a CS GSM network, the person skilled in the art has no difficulty in applying the teachings of the present invention to other mobile networks, either CS or PS.

For example, in a UMTS CS network according to another embodiment of the present invention, a requesting UE sends the MO Location Services invoke to the 3G-MSC serving the location area of the requesting UE, which in turn sends the new ORIGINATING_UE_LOCATION_REQUEST MAP message to the GMLC. The target UE is then positioned after having passed the privacy checks according to the invention and the MSC serving the requesting UE is notified by the ORIGINATING_UE_LOCATION_RESPONSE MAP message, and so on.

The skilled in the art easily understands that the above described steps may be performed by any computer hardware and/or software and telecommunications means programmed through conventional techniques in order to take into account the additional information data needed by the present invention. A combination of processor, memory and communications means is required in order to check the availability of a list of allowable identifiers, together with checking means, preferably implemented through software, for comparing the identifiers or the phone numbers to the requesting UE's identifier or phone number and for returning a result.

The invention is therefore preferably implemented by introducing new functionality in existing systems, through conventional techniques which are clearly in the reach of the average technician and, therefore, are not hereby discussed in detail.

It has thus been shown that the present invention fulfils the proposed aim and objects. Clearly, several modifications will be apparent to and can be readily made by the skilled in the art without departing from the scope of the present invention. Therefore, the scope of the claims shall not be limited by the illustrations or the preferred embodiments given in the description in the form of examples, but rather the claims shall encompass all of the features of patentable novelty that reside in the present invention, including all the features that would be treated as equivalents by the skilled in the art.

## Claims

1. A method for positioning a target user equipment (1) of a first subscriber within a network for cellular communications (10), comprising the steps of:
(a) at a first service node connected to a Gateway Mobile Location Center (35), receiving (420) a Mobile Originating Location Request MO-LR Location Services invoke from a requesting User Equipment (3) of a second subscriber, said invoke comprising a target identifier of said target user equipment (1);
(b) initiating (425) a checking (440) whether an identifier associated with said requesting user equipment (3) is comprised within a list of allowable identifiers of respective user equipments which are allowed to position said target user equipment (1);
(c) in response to a determination that said identifier associated with said requesting user equipment (3) is comprised within said list of allowable identifiers, initiating (500) a positioning of said target user equipment (1) and returning (525) location information resulting from said mobile terminating positioning to the requesting user equipment (3).

2. The method of claim 1, further comprising the step of storing said list of allowable identifiers in a database located in a Home Location Register or in a Home Subscriber Server (45).

3. The method of claim 2, wherein said database is comprised in a Subscriber Location Service Privacy Profile, the method further comprising the step of downloading said list of allowable identifiers to a Visitor Location Register (55) of a second service node (25) which serves the area visited by said target user equipment (1).

4. The method of claim 3, wherein said downloading step comprises the step of sending an INSERT_SUBSCRIBER_DATA Mobile Application Part message to said second service node (25), which message is modified so as to carry said list of allowable identifiers.

5. The method of claim 1 wherein said Mobile Originating Location Request MO-LR Location Services invoke is comprised within a Direct Transfer Application Part REGISTER message which is modified so as to carry said target identifier.

6. The method of claim 1 further comprising the step (423) of, after receiving said Mobile Originating Location Request MO-LR Location Services invoke at said first service node, checking whether said identifier of said requesting User Equipment (3) is allowed to use a Mobile Originating Location Request procedure to get location information of a target User Equipment other than its own.

7. The method of claim 1, further comprising the step of:
after having initiated said checking, sending (435) a PROVIDE_SUBSCRIBER_LOCATION Mobile Application Part message from said Gateway Mobile Location Center (35) to a second service node (25) which serves the area visited by said target user equipment (1), said PROVIDE_SUBSCRIBER_LOCATION message comprising further information that the requesting entity is an originating user equipment rather than a Location Services client.

8. The method any one of the preceding claims, wherein said checking (440) is performed at a Mobile Switching Center or at a Serving General Packet Radio Service Support Node.

9. The method of any one of the preceding claims further comprising the step of: after said receiving said Mobile Originating Location Request MO-LR Location Services invoke at said first service node, forwarding said invoke to said Gateway Mobile Location Center (35).

10. The method any one of the preceding claims, wherein each of said target identifier and said allowable identifiers is a phone number of a respective subscriber.

11. A telecommunications system for positioning a target user equipment (1) of a first subscriber within a network for cellular communications, wherein the system comprises a service node connected to a Gateway Mobile Location Center (35) and to means (25, 100) for positioning user equipments, said service node comprising means for receiving a Mobile Originating Location Request MO-LR Location Services invoke from a requesting User Equipment (3) of a second subscriber, said invoke comprising a target identifier of said target user equipment (1),
and wherein the system comprises:
memory means (45) for storing a list of allowable identifiers of respective user equipments which are allowed to position said target user equipment (1),
checking means for checking whether an identifier associated with said requesting user equipment (3) is comprised within said list of allowable identifiers, and
means for returning location information resulting from said positioning to the requesting user equipment in response to a determination that said identifier associated with said requesting user equipment (3) is comprised within said list of allowable identifiers.

12. The telecommunications system of claim 11, wherein said memory means (45) are comprised in one of a Home Location Register or a Home Subscriber Server.

13. The telecommunications system of claim 11, wherein said checking means are comprised at a Mobile Switching Center (25) or at a Serving General Packet Radio Service Support Node serving the target user equipment (1).

14. A service node for positioning a target user equipment (1) of a first subscriber within a network for cellular communications, the service node (25) comprising means for communicating with a Gateway Mobile Location Center (35) supporting positioning functionality and with the target user equipment (1), wherein the service node (25) comprises:
means for receiving a Mobile Originating Location Request MO-LR Location Services invoke from a requesting User Equipment (3) of a second subscriber, said invoke comprising a target identifier of said target user equipment (1),
means for initiating a checking whether an identifier associated with said requesting user equipment (3) is comprised within a list of allowable identifiers of respective user equipments which are allowed to position said target user equipment (1), and
means for initiating a positioning of said target user equipment (1), in response to a determination that said identifier associated with said requesting user equipment (3) is comprised within said list of allowable identifiers.

15. The service node of claim 14, wherein said service node is one of a Mobile Switching Center or a Serving General Packet Radio Service Support Node.

16. The service node of claims 14 or 15, wherein it is connected to a Radio Access Network (100), which is one of a Global System for Mobile communication Radio Access Network (120) or a Universal Mobile Telecommunication System Radio Access Network (130) or a Code Division Multiple Access network.

## Patentansprüche

1. Verfahren zum Positionieren eines Ziel- Benutzer-Endgeräts (1) eines ersten Teilnehmers innerhalb eines Netzes für zellulare Kommunikation (10), das die folgenden Schritte aufweist:
(a) an einem ersten Dienstknoten, der mit einem Gateway Mobile Location Center (35) verbunden ist, Empfangen (420) eines Mobile Originating Location Request MO-LR-Lokalisierungsdienst-Aufrufs von einem anfragenden Benutzer- Endgerät (3) eines zweiten Teilnehmers, wobei der Aufruf einen Zielidentifikator des Ziel- Benutzer- Endgeräts (1) aufweist,
(b) Veranlassen (425) eines Prüfens (440), ob ein Identifikator, der zu dem anfragenden Benutzer-Endgerät (3) gehört, in der Liste zugelassener Identifikatoren jeweiliger Benutzer- Endgeräte enthalten ist, denen es gestattet ist, das Ziel-Benutzer- Endgerät (1) zu positionieren,
(c) als Reaktion auf das Bestimmen, dass der Identifikator, der zu dem anfragenden Benutzer-Endgerät (3) gehört, in der Liste zulässiger Identifikatoren enthalten ist, Veranlassen (500) eines Positionierens des Ziel- Benutzer-Endgeräts (1) und Rücksenden (525) von Lokalisierungsinformation, die sich aus besagter mobile terminating Positionierung ergibt, an das anfragende Benutzer- Endgerät (3).

2. Verfahren nach Anspruch 1, das ferner den Schritt des Speicherns der Liste zulässiger Identifikatoren in einer Datenbank aufweist, die sich in einem Heimatregister oder in einem Heimat- Teilnehmer- Server (45) befindet.

3. Verfahren nach Anspruch 2, wobei die Datenbank aus einem Subscriber Location Service Privacy Profile besteht, wobei das Verfahren ferner den Schritt des Downloadens der Liste zulässiger Identifikatoren in ein Besucherlokalisierungsregister (55) eines zweiten Dienstknotens (25) aufweist, welcher den Bereich bedient, den das Ziel- Benutzer- Endgerät (1) besucht.

4. Verfahren nach Anspruch 3, wobei der Downloadschritt den Schritt des Sendens einer INSERT_SUBSCRIBER_DATA Mobile Application Part-Nachricht zu dem zweiten Dienstknoten (25) aufweist, wobei die Nachricht geändert ist, so dass sie die Liste der zulässigen Identifikatoren trägt.

5. Verfahren nach Anspruch 1, wobei der Mobile Originating Location Request MO-LR-Lokalisierungsdienst-Aufruf in einer Direct Transfer Application Part REGISTER-Nachricht enthalten ist, die geändert ist, so dass sie den Zielidentifikator trägt.

6. Verfahren nach Anspruch 1, das ferner den Schritt (423) aufweist, bei dem nach Empfangen des Mobile Originating Location Request MO-LR-Lokalisierungsdienst-Aufrufs an dem ersten Dienstknoten geprüft wird, ob der Identifikator des anfragenden Benutzer- Endgeräts (3) befugt ist, das Mobile Originating Location Request- Verfahren zu verwenden, um Lokalisierungsinformation eines anderen Ziel- Benutzer- Endgeräts zu holen als ihre eigene.

7. Verfahren nach Anspruch 1, das ferner folgende Schritte aufweist:
nach dem Veranlassen des Prüfens, Senden (435) einer PROVIDE_SUBSCRIBE_LOCATION Mobile Application Part-Nachricht von dem Gateway Mobile Location Center (35) zu einem zweiten Dienstknoten (25), der den Bereich, der von dem Ziel- Benutzer- Endgerät (1) besucht wird, bedient, wobei die PROVIDE_SUBSCRIBER_LOCATION- Nachricht ferner die Information enthält, dass die anfragende Einheit ein Ursprungsbenutzer- Endgerät und nicht ein Lokalisierungsdiensteclient ist.

8. Verfahren nach einem der vorhergehenden Ansprüche, wobei das Prüfen (440) an dem Mobile Switching Center oder an einem Service General Packet Radio Service Support Node ausgeführt wird.

9. Verfahren nach einem der vorhergehenden Ansprüche, das ferner den folgenden Schritt aufweist: nach dem Empfangen des Mobiles Originating Location Request MO-LR-Lokalisierungsdienst-Aufrufs an dem ersten Dienstknoten, Weiterleiten des Aufrufs an den Gateway Mobile Location Center (35).

10. Verfahren nach einem der vorhergehenden Ansprüche, wobei sowohl der Zielidentifikator als auch die zulässigen Identifikatoren eine Rufnummer eines jeweiligen Teilnehmers sind.

11. Telekommunikationssystem zum Positionieren eines Ziel-Benutzer- Endgeräts (1) eines ersten Teilnehmers innerhalb eines Netzes für zellulare Kommunikation, wobei das System einen Dienstknoten aufweist, der mit einem Gateway Mobile Location Center (35) und mit Mitteln (25, 100) zum Positionieren von Benutzer-Endgeräten verbunden ist, wobei der Dienstknoten Mittel zum Empfangen eines Mobile Originating-Location Request MO-LR-Lokalisierungsdienst-Aufrufs von einem anfragenden Benutzer- Endgerät (3) eines zweiten Teilnehmers aufweist, wobei der Aufruf einen Zielidentifikator des Ziel- Benutzer- Endgeräts (1) enthält,
und wobei das System Folgendes aufweist:
Speichermittel (45) zum Speichern einer Liste zulässiger Identifikatoren jeweiliger Benutzer- Endgeräte, denen es gestattet ist, das Ziel- Benutzer- Endgerät (1) zu positionieren,
Prüfmittel zum Prüfen, ob ein Identifikator, der zu dem anfragenden Benutzer- Endgerät (3) gehört, in der Liste zulässiger Identifikatoren enthalten ist, und
Mittel zum Rücksenden von Lokalisierungsinformation, die sich aus dem Positionieren ergibt, an das anfragende Benutzer- Endgerät als Reaktion auf ein Bestimmen, dass der Identifikator, der zu dem anfragenden Benutzer- Endgerät (3) gehört, in der Liste zulässiger Identifikatoren enthalten ist.

12. Telekommunikationssystem nach Anspruch 11, wobei das Speichermittel (45) entweder in einem Heimatregister oder einem Heimat- Teilnehmer- Server enthalten ist.

13. Telekommunikationssystem nach Anspruch 11, wobei das Prüfmittel an der Mobile Switching Center (25) oder an dem Serving General Packet Radio Service-Support Node enthalten ist, der das Ziel- Benutzer- Endgerät (1) bedient.

14. Dienstknoten zum Positionieren eines Ziel- Benutzer-Endgeräts (1) eines ersten Teilnehmers in einem Netz für zellulare Kommunikationen, wobei der Dienstknoten (25) Mittel zum Kommunizieren mit einem Gateway Mobile Location Center (35), das Positionierungsfunktionalität unterstützt, und mit dem Ziel- Benutzer- Endgerät (1) aufweist, wobei der Dienstknoten (25) Folgendes aufweist:
Mittel zum Empfangen eines Mobile Originating Location Request MO-LR-Lokalisierungsdienst-Aufrufs von einem anfragenden Benutzer- Endgerät (3) eines zweiten Teilnehmers, wobei der Aufruf einen Zielidentifikator des Ziel- Benutzer- Endgeräts (1) aufweist,
Mittel zum Veranlassen des Prüfens, ob ein Identifikator, der zu dem anfragenden Benutzer- Endgerät (3) gehört, in einer Liste zulässiger Identifikatoren jeweiliger Benutzer- Endgeräte, denen es gestattet ist, das Ziel- Benutzer- Endgerät (1) zu positionieren, enthalten ist, und
Mittel zum Veranlassen eines Positionierens des Ziel-Benutzer- Endgeräts (1) als Reaktion auf das Bestimmen, dass der Identifikator, der mit dem anfragenden Benutzer- Endgerät (3) verbunden ist, in der Liste zulässiger Identifikatoren enthalten ist.

15. Dienstknoten nach Anspruch 14, wobei der Dienstknoten entweder ein Mobile Switching Center oder ein Serving General Packet Radio Service Support Node ist.

16. Dienstknoten nach den Ansprüchen 14 oder 15, wobei dieser mit einem Funkzugangsnetz (100) verbunden ist, das entweder ein Global System For Mobile Communication Radio Access Network (120) oder ein Universal Mobile Telecommunication System Radio Access Network (130) oder ein Code Division Multiple Access Network ist.

## Revendications

1. Procédé pour localiser un équipement d'utilisateur cible (1) d'un premier abonné à l'intérieur d'un réseau de communications cellulaires (10) comprenant les étapes consistant à :
(a) au niveau d'un premier noeud de service connecté à un centre de géolocalisation de mobiles (35), recevoir (420) une invocation de services de localisation, demande de localisation émanant d'un mobile MO-LR en provenance d'un équipement d'utilisateur demandeur (3) d'un second abonné, ladite invocation comprenant un identifiant cible dudit équipement d'utilisateur cible (1) ;
(b) lancer (425) une vérification (440) consistant à savoir si un identifiant associé audit équipement d'utilisateur demandeur (3) est compris dans une liste d'identifiants autorisables d'équipements d'utilisateurs respectifs qui sont autorisés à localiser ledit équipement d'utilisateur cible (1) ;
(c) en réponse à une détermination que ledit identifiant associé audit équipement d'utilisateur demandeur (3) est compris dans ladite liste d'identifiants autorisables, lancer (500) une localisation dudit équipement d'utilisateur cible (1) et renvoyer (525) une information de localisation résultant de ladite localisation de mobile de destination vers l'équipement d'utilisateur demandeur (3).

2. Procédé selon la revendication 1, comprenant en outre l'étape consistant à mémoriser ladite liste d'identifiants autorisables dans une base de données située dans un registre de localisation d'origine ou dans un serveur d'abonné de rattachement (45).

3. Procédé selon la revendication 2, dans lequel ladite base de données est comprise dans un profil de confidentialité de service de localisation d'abonné, le procédé comprenant en outre l'étape consistant à télécharger ladite liste d'identifiants autorisables dans un registre de localisation visiteur (55) d'un second noeud de service (25) qui dessert la zone visitée par ledit équipement d'utilisateur cible (1).

4. Procédé selon la revendication 3, dans lequel ladite étape de téléchargement comprend l'étape consistant à envoyer un message de Sous-Système Application Mobile INSERT_SUBSCRIBER_DATA audit second noeud de service (25), lequel message est modifié de manière à transporter ladite liste d'identifiants autorisables.

5. Procédé selon la revendication 1, dans lequel ladite invocation de services de localisation, demande de localisation émanant d'un mobile MO-LR est comprise à l'intérieur d'un message REGISTER de Sous-Système d'Application de Transfert Direct qui est modifié de manière à transporter ledit identifiant cible.

6. Procédé selon la revendication 1, comprenant en outre l'étape (423) consistant à, après la réception de ladite invocation de services de localisation, demande de localisation émanant d'un mobile MO-LR au niveau dudit premier noeud de service, vérifier si ledit identifiant dudit équipement d'utilisateur demandeur (3) est autorisé à utiliser une procédure de demande de localisation émanant d'un mobile afin d'obtenir l'information de localisation d'un équipement d'utilisateur cible autre que son propre équipement d'utilisateur.

7. Procédé selon la revendication 1, comprenant en outre l'étape consistant à :
après avoir lancé ladite vérification, envoyer (435) un message de Sous-Système Application Mobile PROVIDE_SUBSCRIBER_LOCATION en provenance dudit centre de géolocalisation de mobiles (35) vers un second noeud de service (25) qui dessert la zone visitée par ledit équipement d'utilisateur cible (1), ledit message PROVIDE_SUBSCRIBER_LOCATIOB comprenant l'information supplémentaire indiquant que l'entité demandeuse est un équipement d'utilisateur d'origine plutôt qu'un client aux services de localisation.

8. Procédé selon une quelconque des revendications précédentes, dans lequel ladite vérification (440) est effectuée au niveau d'un centre de commutation pour les services mobiles ou au niveau d'un noeud de support du service général de radiocommunication par paquets de desserte.

9. Procédé selon une quelconque des revendications précédentes, comprenant l'étape consistant à : après ladite réception de ladite invocation de services de localisation, demande de localisation émanant d'un mobile MO-LR au niveau dudit premier noeud de service, acheminer ladite invocation vers ledit centre de géolocalisation de mobiles (35).

10. Procédé selon une quelconque des revendications précédentes, dans lequel chacun desdits identifiants de cible et desdits identifiants autorisables est un numéro de téléphone d'un abonné respectif.

11. Système de télécommunication pour localiser un équipement d'utilisateur cible (1) d'un premier abonné à l'intérieur d'un réseau de communications cellulaires, dans lequel le système comprend un noeud de service connecté à un centre de géolocalisation de mobiles (35) et à des moyens (25,100) pour localiser les équipements d'utilisateurs, ledit noeud de service comprenant un moyen pour recevoir une invocation de services de localisation, demande de localisation émanant d'un mobile MO-LR en provenance d'un équipement d'utilisateur demandeur (3) d'un second abonné, ladite invocation comprenant un identifiant cible dudit équipement d'utilisateur cible (1), et moyennant quoi le système comprend :
des moyens de mémoire (45) pour mémoriser une liste d'identifiants autorisables des équipements d'utilisateurs respectifs qui sont autorisés à localiser ledit équipement d'utilisateur cible (1),
des moyens de vérification pour vérifier si un identifiant associé audit équipement d'utilisateur demandeur (3) est compris à l'intérieur de ladite liste d'identifiants autorisables, et
des moyens pour renvoyer une information de localisation résultant de ladite localisation à l'équipement d'utilisateur demandeur en réponse à une détermination que ledit identifiant associé audit équipement d'utilisateur demandeur (3) est compris dans ladite liste d'identifiants autorisables.

12. Système de télécommunication selon la revendication 11, dans lequel lesdits moyens de mémoire (45) sont compris dans un d'un registre de localisation d'origine ou un serveur d'abonné de rattachement.

13. Système de télécommunication selon la revendication 11, dans lequel lesdits moyens de vérification sont compris au niveau d'un centre de commutation pour les services mobiles (25) ou un noeud de support du service général de radiocommunication par paquets de desserte desservant l'équipement d'utilisateur cible (1).

14. Noeud de service pour localiser un équipement d'utilisateur cible (1) d'un premier abonné à l'intérieur d'un réseau de communications cellulaires, le noeud de service (25) comprenant des moyens pour communiquer avec un centre de géolocalisation de mobiles (35) supportant une fonctionnalité de localisation et avec l'équipement d'utilisateur cible (1), dans lequel le noeud de service (25) comprend :
des moyens pour recevoir une invocation de services de localisation, demande de localisation émanant d'un mobile MO-LR en provenance d'un équipement d'utilisateur demandeur (3) d'un second abonné, ladite invocation comprenant un identifiant cible dudit équipement d'utilisateur cible (1),
des moyens pour lancer une vérification consistant à savoir si un identifiant associé audit équipement d'utilisateur demandeur (3) est compris dans une liste d'identifiants autorisables des équipements d'utilisateurs respectifs qui sont autorisés à localiser ledit équipement d'utilisateur cible (1), et des moyens pour lancer une localisation dudit équipement d'utilisateur cible (1), en réponse à une détermination que ledit identifiant associé audit équipement d'utilisateur demandeur (3) est compris dans ladite liste d'identifiants autorisables.

15. Noeud de service selon la revendication 14, moyennant quoi ledit noeud de service est un d'un centre de commutation pour les services mobiles ou un noeud de support du service générale de radiocommunication par paquets de desserte.

16. Noeud de service selon les revendications 14 ou 15, moyennant quoi il est connecté à un réseau d'accès radio (100), qui est un d'un réseau d'accès radio GSM (Global System for Mobile communication) (120) ou d'un réseau d'accès radio UMTS (Universal Mobile Telecommunication System) (130) ou un réseau d'accès multiple par répartition de code.
